# EUROPEAN PATENT SPECIFICATION

(11) **EP 2 591 039 B1**
(45) Date of publication and mention of the grant of the patent: **13.06.2018**
(21) Application number: 11803879.3
(22) Date of filing: 01.07.2011
(51) Int. Cl.: C08G 63/20, C08G 63/181

(54) **BRANCHED POLYESTER**
VERZWEIGTES POLYESTER
POLYESTER RAMIFIÉ

(30) Priority: 07.07.2010 SE 1000740
(43) Date of publication of application: 15.05.2013
(73) Proprietor: Perstorp AB, 284 80 Perstorp (SE)
(72) Inventor: PERSSON, Per, S-254 40 Helsingborg (SE); SÖRENSEN, Kent, S-284 35 (SE); LUNDMARK, Stefan, S-263 93 Höganäs (SE)
(74) Representative: Hoffmann Eitle
(86) International application number: PCT/SE2011/000127
(87) International publication number: WO 2012/005647

(56) References cited:
- EP-A1- 1 178 065
- EP-A1- 2 199 314
- WO-A1-2007/052847
- WO-A1-2009/104780
- WO-A1-2009/135921
- JP-A- 2009 062 465
- JP-A- 2009 263 509
- NL-C- 2 002 382
- MOORE, J.A. ET AL.: 'Polyesters Derived from Furan and Tetrahydrofuran Nuclei' MACROMOLECULES vol. 11, no. 3, 1978, pages 568 - 573, XP002413093

## Description

The present invention relates to a novel branched polyester obtained by subjecting a raw material composition comprising (A) a dicarboxylic acid component, comprising at least one furandicarboxylic acid, (B) a diol component, and (C) a branching component comprising at least one compound having at least three or more reactive groups, to esterification reaction(s), as further specified by the appended claims. The present invention more particularly refers to a said polyester being useful as component in coating systems, such as powder coatings, polyurethane coatings and coil coatings.

Polyesters are well known in the art and frequently and typically used in a large number of applications, such as putties, alkyd resins and saturated or unsaturated polyesters for lacquers, enamels, gel coats, powder coatings, coil coatings, polyurethane resins and other coating systems, printing inks, synthetic lubricants, plasticisers, fibres, dental materials, adhesives, packagings and moulding compositions comprising for instance poly(alkylene)phthalates, cosmetics and hygiene products.

Polyesters and their applications and production methods are well known in the art and do not require any further and over extensively detailed description. Said products are thoroughly disclosed and discussed in a number of chemicals encyclopaedias and handbooks, such as Kirk-Othmer, Encyclopedia of Chemical Technology and Modern Polyesters: Chemistry and Technology of Polyesters and Copolyesters, ed. by John Scheirs and Timothy E. Long, 2003, John Wiley & Sons Ltd, ISBN 0-471-49856-4.

Interest in powder coatings is primarily related to meeting increasingly stringent anti-pollution regulations. The development of highly reactive powder systems which cure at low energy and the possibility of economical thin films have made powder coatings competitive with waterborne and high solids systems. Powder coatings can be applied by fluidised-bed (thick films, 50-150 µm), electrostatic spray (thin films, 30-40 µm) or by process of triboelectric friction or electromagnetic brush coating. Carboxyl terminated polyesters cured with for instance triglycidyl isocyanurate are frequently used in weatherable powder coating systems. The trifunctionality of the isocyanurate is responsible for its high reactivity with carboxyl terminated polyesters. Further powder coatings include systems that can be crosslinked with for instance β-hydroxyalkylamides. These types of powder coatings are used in for instance protection of metal window frames, as well as for exterior siding. To improve the weatherability of epoxies, which normally chalk and yellow, epoxy polyester alloys or hybrids are used. These powders with improved overbake resistance cure at temperatures as low as 130°C. They have film flexbility similar to epoxy resins, but their hardness is slightly decreased. Corrosion resistance is equivalent to epoxy powders in most cases. In powder coating almost all material can be reused, hence there is little waste and the method is solvent-free. Particle sizes in powder coating processes are typically in the range of for instance 10-80µm. The particles can be mixed with other polymer materials, such as other polyesters, polyurethanes, polyester epoxies, straight epoxies and acrylics and/or mixed with pigments and/or hardeners prior to the coating process. Suitable hardeners are for example hydroxyalkylamides, isophorone diisocyanates, blocked isocyanates, triglycidyl isocyanurates and other glycidyl ether compounds.

For the manufacture of polyurethane polymers, at least two groups of at least bifunctional substances are needed as reactants, that is compounds with isocyanate groups and compounds with active hydrogen atoms. The physical and chemical character, structure and molecular size of these compounds influence the polymerisation reaction, as well processing and final physical properties of the finished polyurethane. In addition, additives, such as catalysts, surfactants, blowing agents, cross linkers, flame retardants, light stabilisers and fillers are used to control and/or modify the reaction process and/or performance characteristics of the polymer. The first essential component of a polyurethane polymer is the isocyanate and diisocyanates are preferred as monomers or monomer units, since they themselves are used to produce polymeric isocyanates having three or more isocyanate functional groups. The second essential component of a polyurethane polymer is typically a compound having two or more hydroxyl groups, such as a polyol, a hydroxyfunctional polyether, a hydroxyfunctional polyester, such as a polyester according to the present invention and/or a polycarbonate polyol. The polymerisation reaction is typically catalysed by for instance tertiary amines and organometallic compounds.

Coil coating is typically a continuous and highly automated process for coating metals before fabrication. Metals can be coated with for instance solvent borne or waterborne polyester coatings, such as a coating comprising a polyester according to the present invention, epoxies, vinyls, plastisols, acrylics and flourocarbons.

General environmental concerns, such as use of renewable resources rather than crude-oil based chemistries, biodegradable polymers, the pressure to recycle waste materials back into the raw material supply, etc, impact polymer technology. Technologies developed in response to environmental concerns have been emerging and will continue to emerge as new issues supplant existing ones. A furandicarboxylic acid can easily be obtained from renewable resources, such glucose and fructose derived from for instance starch and hemicellulose.

The present invention accordingly refers to a branched polyester obtained by subjecting a raw material composition comprising (A) a dicarboxylic acid component comprising at least one furandicarboxylic acid, (B) a diol component and (C) a branching component comprising at least one compound having three or more reactive groups able to react with hydroxyl and/or carboxyl groups, to one or more esterification reaction(s), as further specified by the appended claims.

Said furandicarboxylic acid is in preferred embodiments of the present invention 2,3-, 3,4-, 2,5-furandicarboxylic acid or 2,3-, 3,4- or 2,5-tetrahydrofurandicarboxylic acid.

Embodiments of said dicarboxylic acid component (A) further suitably and preferably comprises at least one additional aliphatic, cycloaliphatic or aromatic dicarboxylic acid or a corresponding anhydride, alkyl ester or halide, such as but not limited to *o*-phthalic acid or anhydride, isophthalic acid, terephthalic acid, 1,2-cyclohexanedicarboxylic acid or anhydride, 1,3-cyclohexanedicarboxylic acid, 1,4-cyclohexanedicarboxylic acid, tetrahydrophthalic acid or anhydride, maleic anhydride, fumaric acid, adipic acid, azelaic acid, succinic acid or anhydride, sebacic acid, itaconic acid, mesaconic acid or citraconic acid or a where applicable a corresponding alkyl ester, such as a dialkyl ester, preferably a dimethyl or diethyl ester, or a corresponding halide, such as a chloride, bromide and/or iodide.

Said diol component (B) comprises at least one 2,2-dialkyl-1,3-propanediol or a polyalkoxylated 2,2-dialkyl-1,3-propanediol.

Said branching component (C) is in preferred embodiments of the present invention suitably a triol or polyol selected from the group consisting of a 2,2-dihydroxyalkyl-1,3-propanediol, a 2-alkyl-2-hydroxyalkyl-1,3-propanediol, a polyalkoxylated 2,2-dihydroxyalkyl-1,3-propanediol, a polyalkoxylated 2-alkyl-2-hydroxyalkyl-1,3-propanediol, wherein said alkyl preferably is C₁-C₁₂, such as C₁-C₈, linear or branched alkyl and said polyalkoxylated preferably is polymethoxylated, polyethoxylated and/or polypropoxylated. Suitable triols and polyols can be exemplified by glycerol, di-glycerol, trimethylolethane, trimethylolpropane, trimethylolbutane, di-trimethylolethane, di-trimethylolpropane, di-trimethylolbutane, pentarerythritol, di-pentaerythritol, tri-pentaerythritol, and corresponding polyalkoxylated species.

Further embodiments of said branching component (C) include tri or polycarboxylic acids, such as trimelletic and pyromelletic acid or a corresponding anhydride or halide, as well as hydroxyfunctional carboxylic acids having three or more reactive groups, such as dimethylolpropionic acid, dimethylolbutyric acid, trihydroxymethylacetic acid, dihydroxymethylvaleric acid, dihydroxypropionic acid, heptonic acid, citric acid, tartaric acid, dihydroxymalonic acid, dihydroxybenzoic acid and gluconic acid.

Certain embodiments of said raw material composition, yielding the branched polyester according to the present invention, can advantageously further comprises an isocyanate component comprising at least one isocyanate or polyisocyanate, such as but not limited to methyl isocyanate, toluene diisocyanate, diphenyl methane diisocyanate, hexamethylene diisocyanate, isophorone diisocyanate, tetramethylxylene diisocyanate, dicyclohexyl methane diisocyanate, furan diisocyanate, tetrahydrofuran diisocyanate, cyclohexylene diisocyanate, xylene diisocyanate, naphthalene diisocyanate, phenylene diisocyanate, nonane triisocyanate and/or triphenyl methane triisocyanate. Further suitable isocyanate based components include isocyanurates, biurets and allophanates.

The raw material composition of the present invention can, in yet further embodiments thereof, advantageously comprises an epoxy functional component comprising at least one epoxy or polyepoxy compound, such as but not limited to a glycidyl ester and/or a glycidyl ether. Suitable epoxy functional compounds can be exemplified by, but not limited to, for instance 1,2-epoxy-3-allyloxypropane, 1-allyloxy-2,3-epoxypropane, 1,2-epoxy-3-phenoxypropane, 1-glycidyloxy-2-ethylhexane, bisphenol A-diglycidyl ether or a reaction product thereof, diglycidyl ether of pentaerythritol spiroglycol, diglycidyl terephthalate, epoxidised soybean fatty acid, epoxidised soybean oil, epoxidised linseed oil, epoxidised dehydrated castor oil, epoxidised polyvinyl alcohol and/or 3,4-epoxy-cyclohexylmethyl-3,4-epoxycyclohexane-carboxylate.

In yet further embodiments, the raw material composition, yielding the polyester of the present invention, can comprise components such as thiols, polythiols, thio acids, polythio acids, amines, polyamines, vinylics, such as styrene and vinyltoluene, silicones and/or oxetanes and hydroxyoxetanes having one or more hydroxyl groups, such as oxetanes of 2-alkyl-1,3-propanediols, 2,2-dialkyl-1,3-propanediols, 2-alkyl-2-hydroxyalkyl-1,3-propanediols, 2,2-dihydroxyalkyl-1,3-propanediols, as well as dimers and polymers thereof, wherein alkyl for instance is linear or branched having 1 to 12 carbon atoms.

Said raw material composition can furthermore comprise a monohydroxy monocarboxylic acid, such as phenylcarboxylic acid, hydroxyethanoic acid, hydroxypropanoic acid, hydroxybutanoic acid, hydroxyheptanoic acid, hydroxyhexanoic acid, hydroxyvaleric acid, hydroxypropionic acid, hydroxypivalic acid, an inner ether, such as glycolide, valerolactone, propiolactone or caprolactone, a monocarboxylic acid, such as abietic acid, benzoic acid, p-tert.-butylbenzoic acid, caproic acid, capric acid, acrylic acid, methacrylic acid, crotonic acid, isocrotonic acid, 2-ethylhexanoic acid, 2-propylheptanoic acid, lauric acid, linoleic acid, oleic acid and/or pelargonic acid, and/or a linear or branched aliphatic, cycloaliphatic or aromatic monofunctional alcohol, such 2-ethylhexanol, 2-propylheptanol, isononanol, isodecanol, 5-methyl-5-hydroxymethyl-1,3-dioxane, 5-ethyl-5-hydroxymethyl-1,3-dioxane, glycerol di(meth)allyl ether, trimethylolethane di(meth)allyl ether, trimethylolpropane di(meth)allyl ether, trimethylolbutane di(meth)allyl ether and pentaerythritol tri(meth)allyl ether.

In a further aspect, the present invention refers to the use of a polyester, as herein disclosed, in coating systems, such as powder coatings and 2-component polyurethane (2-K PUR) coatings.

Without further elaboration, it is believed that one skilled in the art can, using the preceding description, utilise the present invention to its fullest extent. The following preferred specific embodiments are, therefore, to be construed as merely illustrative and not limitative of the remainder of the disclosure in any way whatsoever. In the following Examples 1-3 refer to preparation and characterisation of branched polyesters according to embodiments of the present invention and Examples 4 and 5 to evaluation of polyesters according to Examples 2 and 3 in coatings.

### Example 1

127.9 parts by weight of neopentyl glycol (90% aq), 2.9 parts by weight of trimethylolpropane and 4.3 parts by weight of adipic acid were charged in a reaction vessel equipped agitator, condenser and inert gas inlet. The reaction mixture was under nitrogen purge heated to 70°C and 155.1 parts by weight of 2,5-furandicarboxylic acid, 0.09 part by weight of an esterification catalyst (Fascat® 4101) and 0.08 part by weight of tris(nonylphenyl)phosphite as antioxidant were charged. The temperature was now under atmospheric pressure raised to 180°C (gradient of 2°C/min). The reaction temperature was subsequently increased to 235°C (gradient 0.1°C/min). The synthesis was run to clarity and until an acid value of below 10 mg KOH/g was reached. The reaction product was now cooled to 160°C and 5.8 parts by weight of adipic acid, 20.0 parts by weight of isophthalic acid and 1.3 parts by weight of neopentyl glycol (to compensate for measured losses) were charged. The reaction temperature was now raised to 235°C (gradient 0.3°C/min) and kept until an acid value of ca. 42 mg KOH/g was reached. Vacuum was now applied to the reactor to facilitate the last removal of esterification water. The reaction product was cooled when an acid value of less than 40 mg KOH/g was reached. The final acid value of yielded powder polyester was determined to be 38.2 mg KOH/g.

### Example 2

3.5 parts by weight of adipic acid, 208.3 parts by weight of 2,5-furandicarboxylic acid, 160.2 part by weight of neopentyl glycol (90% aq) and 7.5 parts by weight of trimethylolpropane were charged in a reaction vessel equipped with agitator, condenser, inert gas inlet and an intermediate cooler (99.5°C). The reaction mixture was under nitrogen purge heated to 235°C (gradient 0.14°C/min). The reaction was after a total reaction time of 12.5 hrs. stopped at an acid value of approx. 55 mg KOH/g.

Yielded branched polyester exhibited following properties:

| | |
|---|---|
| Acid value, mg KOH/g | 54 |
| Hydroxyl value, mg KOH/g | 6 |
| Glass transition temperature, °C | 55 |

### Example 3

42.6 parts by weight of 2-butyl-2-ethyl-1,3-propanediol, 39.6 parts by weight of neopentyl glycol, 60.8 parts by weight of trimethylolpropane and 5.3 parts by weight of distilled water were charged in a reaction vessel equipped with agitator, condenser, Dean-Stark separator, inert gas inlet and intermediate cooler (99.5°C). The reaction mixture was heated to and dissolved at 140°C followed by addition of 105.0 parts by weight of 2,5-furandicarboxylic acid and xylene as azeotropic solvent. The reaction temperature was now raised to reflux and then slowly to 235°C. The reaction mixture was kept at this temperature until an acid value of below 5 mg KOH/g was reached. The temperature was subsequently reduced to 130°C and 35.1 parts by weight of adipic acid was charged. The temperature was now raised to 210°C and kept until the acid number was less than 5 mg KOH/g. The polyester was finally cooled and diluted with butyl acetate to 55% non-volatile content.

Yielded branched polyester exhibited following properties as 100% non-volatile:

| | |
|---|---|
| Acid value, mg KOH/g | 1.8 |
| Hydroxyl number, mg KOH/g | 145 |
| Molecular weight M_{w}, g/mol | 2200 |

### Example 4

A powder coating having following formulation expressed as parts by weight:

| | |
|---|---|
| Polyester yielded in Example 2 | 57.7 |
| Epikote ™ 1003 (Momentive) | 42.3 |
| Benzoin | 0.8 |
| Resiflow ™ PV88 (Worlee-Chenie GmbH) | 1.6 |
| Ethyl triphenylphosphonium bromide | 1.5 |
| Titanium dioxide | 30.0 |

was prepared using following parameters on a PRISM TSE 16 TC extruder (Thermo Electron Co) and a PULVERISETTE 14 mill (Fritsch GmbH):

| | | |
|---|---|---|
| Extrusion: | Temperature zone 1: | 70°C |
| | Temperature zone 2: | 90°C |
| | Temperature zone 3: | 100°C |
| | Temperature zone 4: | 110°C |
| | Rotation: | 300 rpm |
| | Feeding: | 2 |
| | Torque: | 60-70% |
| Milling: | Sieve: | 120 |

Resulting powder coating was sprayed onto steel panels (Q-panels, S-36, 0.8 x 7 x 152 mm) at a filmthickness (dry) of 50-60 µm and cured at 170-200°C with below result. All tests were performed at 23 ± 2°C and 50 ± 5% relative humidity.

| Curing | 20 min at 170°C | 15 min at 180°C | 10 min at 200°C |
|---|---|---|---|
| Gloss, 60°, % | 95 | 94 | 92 |
| MEK double rubs | > 300 | > 300 | > 300 |

### Example 5

A 2-K PUR coating having following formulation expressed as parts by weight:

| | | |
|---|---|---|
| Mill base: | Polyester yielded in Example 3 | 60.0 |
| | Disperbyk ™ 163 (BYK Chemie GmbH) | 1.6 |
| | Titanium dioxide | 31.4 |
| | Aerosil ™ 200 (Evonik-Degussa GmbH) | 0.8 |
| Let down: | Polyester yielded in Example 3 | 80.0 |
| | Byk ™ 355 (BYK Chemie GmbH) | 0.6 |
| | Byk ™ 306 (BYK Chemie GmbH) | 0.1 |
| Isocyanate: | Tolonate ™ HDT (Perstorp Tolonate, France) | 39.8 |

Resulting 2-K PUR coating was coated on glass and steel panels (Q-panels, S-36, 0.8 x 7 x 152 mm) at a filmthickness (dry) of 40 µm and cured at 30 minutes at 80°C followed by 18 hours at 40°C with below result. All tests were performed at 23 ± 2°C and 50 ± 5% relative humidity.

| | |
|---|---|
| Pendulum hardness, Königs secs. | 174 |
| Adhesion (cross-cut) | 0 (0 = No marking, 5 = Entire film removed) |
| Gloss, 60°, % | 95 |
| MEK double rubs | > 200 |
| Impact, lbs/inch | > 160 |

## Claims

1. A branched coating polyester **characterised in that** it is obtained by subjecting a raw material composition comprising:
(A) a dicarboxylic acid component comprising at least one furandicarboxylic acid,
(B) a diol component comprising at least one 2,2-dialkyl-1,3-propanediol or polyalkoxylated 2,2-dialkyl-1,3-propanediol, and
(C) a branching component comprising at least one triol or polyol selected from the group consisting of a 2,2-dihydroxyalkyl-1,3-propanediol, a 2-alkyl-2-hydroxyalkyl-1,3-propanediol, a polyalkoxylated 2,2-dihydroxyalkyl-1,3-propanediol and a polyalkoxylated 2-alkyl-2-hydroxyalkyl-1,3-propanediol, and/or at least one tri or polycarboxylic acid,
to one or more esterification reaction(s).

2. A branched polyester according to Claim 1 **characterised in that** said furandicarboxylic acid is 2,3-furandicarboxylic acid, 3,4-furandicarboxylic acid, 2,5-furandicarboxylic acid, 2,3-tetrahydrofurandicarboxylic acid, 3,4-tetrahydrofurandicarboxylic acid or 2,5-tetrahydrofurandicarboxylic acid.

3. A branched polyester according to any of the Claims 1-2 **characterised in that** said dicarboxylic acid component (A) further comprises at least one additional aliphatic, cycloaliphatic or aromatic dicarboxylic acid or a corresponding anhydride.

4. A branched polyester according to Claim 3 **characterised in that** said additional dicarboxylic acid is o-phthalic acid or anhydride, isophthalic acid, terephthalic acid, 1,2-cyclohexanedicarboxylic acid or anhydride, 1,3-cyclohexanedicarboxylic acid, 1,4-cyclohexandicarboxylic acid, tetrahydrophthalic acid or anhydride, maleic anhydride, fumaric acid, adipic acid, azelaic acid, succinic acid or anhydride, sebacic acid, itaconic acid, mesaconic acid or citraconic acid.

5. A branched polyester according to Claim 1 **characterised in that** said alkyl is C₁-C₁₂ alkyl, such as C₁-C₈, linear or branched alkyl, and that said polyalkoxylated is polymethoxylated, polyethoxylated and/or polypropoxylated.

6. A branched polyester according to any of the Claims 1-5 **characterised in that** said branching component (C) comprises glycerol, di-glycerol, trimethylolethane, trimethylolpropane, trimethylolbutane, di-trimethylolethane, di-trimethylolpropane, di-trimethylolbutane, pentaerythritol, di-pentaerythritol or tri-pentaerythritol.

7. A branched polyester according to any of the Claims 1-6 **characterised in that** said branching component (C) comprises trimelletic and/or pyromelletic acid or a corresponding anhydride.

8. A branched polyester according to any of the Claims 1-7, **characterised in that** said coating is a decorative and/or protective coating.

9. A branched polyester according to Claim 8, wherein said coating is a powder coating or a 2-K PUR coating.

## Patentansprüche

1. Verzweigter Beschichtungspolyester, **dadurch gekennzeichnet, dass** dieser erhalten wird, indem eine Rohmaterialzusammensetzung, umfassend:
(A) eine Dicarbonsäurekomponente, die wenigstens eine Furandicarbonsäure umfasst,
(B) eine Diolkomponente, die wenigstens ein 2,2-Dialkyl-1,3-propandiol oder ein polyalkoxyliertes 2,2-Dialkyl-1,3-propandiol umfasst, und
(C) eine Verzweigungskomponente, die wenigstens ein Triol oder Polyol, ausgewählt aus der Gruppe, bestehend aus einem 2,2-Dihydroxyalkyl-1,3-propandiol, einem 2-Alkyl-2-hydroxyalkyl-1,3-propandiol, einem polyalkoxylierten 2,2-Dihydroxyalkyl-1,3-propandiol und einem polyalkoxylierten 2-Alkyl-2-hydroxyalkyl-1,3-propandiol, und/oder wenigstens eine Tri- oder Polycarbonsäure umfasst,
einer oder mehreren Veresterungsreaktion(en) unterworfen wird.

2. Verzweigter Polyester gemäß Anspruch 1, **dadurch gekennzeichnet, dass** die Furandicarbonsäure 2,3-Furandicarbonsäure, 3,4-Furandicarbonsäure, 2,5-Furandicarbonsäure, 2,3-Tetrahydrofurandicarbonsäure, 3,4-Tetrahydrofurandicarbonsäure oder 2,5-Tetrahydrofurandicarbonsäure ist.

3. Verzweigter Polyester gemäß einem der Ansprüche 1-2, **dadurch gekennzeichnet, dass** die Dicarbonsäurekomponente (A) weiterhin wenigstens eine zusätzliche aliphatische, cycloaliphatische oder aromatische Dicarbonsäure oder ein entsprechendes Anhydrid umfasst.

4. Verzweigter Polyester gemäß Anspruch 3, **dadurch gekennzeichnet, dass** die zusätzliche Dicarbonsäure o-Phthalsäure oder Anhydrid, Isophthalsäure, Terephthalsäure, 1,2-Cyclohexandicarbonsäure oder Anhydrid, 1,3-Cyclohexandicarbonsäure, 1,4-Cyclohexandicarbonsäure, Tetrahydrophthalsäure oder Anhydrid, Maleinanhydrid, Fumarsäure, Adipinsäure, Azelainsäure, Bernsteimsäure oder Anhydrid, Sebacinsäure, Itakonsäure, Mesakonsäure oder Citraconsäure ist.

5. Verzweigter Polyester gemäß Anspruch 1, **dadurch gekennzeichnet, dass** "Alkyl" C₁₋₁₂-Alkyl, beispielsweise C₁₋₈-, lineares oder verzweigtes Alkyl ist und "polyalkoxyliert" polymethoxyliert, polyethoxyliert und/oder polypropoxyliert ist.

6. Verzweigter Polyester gemäß einem der Ansprüche 1-5, **dadurch gekennzeichnet, dass** die Verzweigungskomponente (C) Glycerin, Diglycerin, Trimethylolethan, Trimethylolpropan, Trimethylolbutan, Ditrimethylolethan, Ditrimethylolpropan, Ditrimethylolbutan, Pentaerythritol, Dipentaerythritol oder Tripentaerythritol umfasst.

7. Verzweigter Polyester gemäß einem der Ansprüche 1-6, **dadurch gekennzeichnet, dass** die Verzweigungskomponente (C) Trimellitsäure und/oder Pyromellitsäure oder ein entsprechendes Anhydrid umfasst.

8. Verzweigter Polyester gemäß einem der Ansprüche 1-7, **dadurch gekennzeichnet, dass** die Beschichtung eine dekorative und/oder protektive Beschichtung ist.

9. Verzweigter Polyester gemäß Anspruch 8, worin die Beschichtung eine Pulverbeschichtung oder eine 2-K-PUR-Beschichtung ist.

## Revendications

1. Polyester de revêtement ramifié **caractérisé en ce qu'**il est obtenu en soumettant une composition de matériaux bruts comprenant :
(A) un composant d'acide dicarboxylique comprenant au moins un acide furanedicarboxylique,
(B) un composant de diol comprenant au moins un 2,2-dialkyl-1,3-propanediol ou un 2,2-dialkyl-1,3-propanediol polyalcoxylé, et
(C) un composant de ramification comprenant au moins un triol ou un polyol choisi dans le groupe constitué d'un 2,2-dihydroxyalkyl-1,3-propanediol, d'un 2-alkyl-2-hydroxyalkyl-1,3-propanediol, d'un 2,2-dihydroxyalkyl-1,3-propanediol polyalcoxylé et d'un 2-alkyl-2-hydroxyalkyl-1,3-propanediol polyalcoxylé, et/ou d'au moins un acide tri- ou polycarboxylique,
à une ou plusieurs réactions d'estérification.

2. Polyester ramifié selon la revendication 1, **caractérisé en ce que** ledit acide furanedicarboxylique est l'acide 2,3-furanedicarboxylique, l'acide 3,4-furanedicarboxylique, l'acide 2,5-furanedicarboxylique, l'acide 2,3-tétrahydrofuranedicarboxylique, l'acide 3,4-tétrahydrofuranedicarboxylique ou l'acide 2,5-tétrahydrofuranedicarboxylique.

3. Polyester ramifié selon l'une quelconque des revendications 1 à 2, **caractérisé en ce que** ledit composant d'acide dicarboxylique (A) comprend en outre au moins un acide dicarboxylique aliphatique, cycloaliphatique ou aromatique supplémentaire ou un anhydride correspondant.

4. Polyester ramifié selon la revendication 3, **caractérisé en ce que** ledit acide dicarboxylique supplémentaire est l'acide o-phtalique ou son anhydride, l'acide isophtalique, l'acide téréphtalique, l'acide 1,2-cyclohexanedicarboxylique ou son anhydride, l'acide 1,3-cyclohexanedicarboxylique, l'acide 1,4-cyclohexanedicarboxylique, l'acide tétrahydrophtalique ou son anhydride, l'anhydride maléique, l'acide fumarique, l'acide adipique, l'acide azélaïque, l'acide succinique ou son anhydride, l'acide sébacique, l'acide itaconique, l'acide mésaconique ou l'acide citraconique.

5. Polyester ramifié selon la revendication 1, **caractérisé en ce que** ledit alkyle est un alkyle en C₁-C₁₂, notamment un alkyle linéaire ou ramifié en C₁-C₈ et **en ce que** ledit polyalcoxylé est polyméthoxylé, polyéthoxylé et/ou polypropoxylé.

6. Polyester ramifié selon l'une quelconque des revendications 1 à 5, **caractérisé en ce que** ledit composant de ramification (C) comprend du glycérol, du diglycérol, du triméthyloléthane, du triméthylolpropane, du triméthylolbutane, du di-triméthyloléthane, du di-triméthylolpropane, du di-triméthylolbutane, du pentaérythritol, du di-pentaérythritol ou du tri-pentaérythritol.

7. Polyester ramifié selon l'une quelconque des revendications 1 à 6, **caractérisé en ce que** ledit composant de ramification (C) comprend de l'acide trimellitique et/ou pyromellitique ou un anhydride correspondant.

8. Polyester ramifié selon l'une quelconque des revendications 1 à 7, **caractérisé en ce que** ledit revêtement est un revêtement décoratif et/ou protecteur.

9. Polyester ramifié selon la revendication 8, dans lequel ledit revêtement est un revêtement pulvérulent ou un revêtement de PUR 2-K.
